# EUROPÄISCHE PATENTSCHRIFT

(11) **EP 2 766 595 B1**
(45) Veröffentlichungstag und Bekanntmachung des Hinweises auf die Patenterteilung: **04.05.2016**
(21) Anmeldenummer: 13726733.2
(22) Anmeldetag: 28.05.2013
(51) Int. Cl.: F02P 3/08, F02P 11/06, F02D 41/22, F02P 3/09, F02P 11/00, B60R 16/03, H02H 11/00

(54) **VERFAHREN ZUR ÜBERPRÜFUNG EINER VERSORGUNGSSCHALTUNG UND ZUGEHÖRIGE VERSORGUNGSSCHALTUNG FÜR MINDESTENS EINEN ZÜNDKREIS**
METHOD FOR CHECKING A SUPPLY CIRCUIT AND ASSOCIATED SUPPLY CIRCUIT FOR AT LEAST ONE IGNITION CIRCUIT
PROCÉDÉ DE CONTRÔLE D'UN CIRCUIT D'ALIMENTATION ET CIRCUIT D'ALIMENTATION CORRESPONDANT POUR AU MOINS UN CIRCUIT D'ALLUMAGE

(30) Priorität: 27.06.2012 DE 102012210931
(43) Veröffentlichungstag der Anmeldung: 20.08.2014
(73) Patentinhaber: Robert Bosch GmbH, 70442 Stuttgart (DE)
(72) Erfinder: SCHUMACHER, Hartmut, 71691 Freiberg (DE); LIST, Carsten, 74399 Walheim (DE)
(86) Internationale Anmeldenummer: PCT/EP2013/060978
(87) Internationale Veröffentlichungsnummer: WO 2014/001011

(56) Entgegenhaltungen:
- DE-A1- 10 111 252
- DE-A1-102008 012 896
- GB-A- 2 025 523
- GB-A- 2 112 857

## Beschreibung

### Stand der Technik

Die Erfindung geht aus von einem Verfahren zur Überprüfung einer Versorgungsschaltung für mindestens einen Zündkreis nach der Gattung des unabhängigen Patentanspruchs 1, einer Versorgungsschaltung für mindestens einen Zündkreis nach der Gattung des unabhängigen Patentanspruchs 11 und von einer korrespondierenden Zündkreisanordnung mit einer solchen Versorgungsschaltung.

Insassenschutzsysteme verfügen über eine Zündkreisanordnung, welche mindestens einen Zündkreis zur Aktivierung von Rückhaltemitteln aufweist. Die Energie zur Aktivierung dieser Rückhaltemittel wird in der Regel aus einem Energiespeicher und/oder aus einem Fahrzeugbordnetz bereitgestellt, welches einen Generator und mindestens eine Batterie umfasst. Das bedeutet, dass bei laufendem Motor der Energiespeicher und/oder der Generator und bei Stillstand des Motors der Energiespeicher und/oder die Batterie die erforderliche Energie zur Aktivierung der Rückhaltemittel zur Verfügung stellt. Die Zündkreisanordnung zu den unterschiedlichen Rückhaltemitteln umfasst in der Regel zwei Schaltungsblöcke, welche jeweils eine Halbleiter-Endstufe und eine korrespondierende Treiber- und/oder Ansteuerschaltung aufweisen. Hierbei ist ein High-Side-Zündkreis in eine Energiezuführungsleitung eingeschleift, und ein Low-Side-Zündkreis ist in die Rückführungsleitung eingeschleift. Zur Erhöhung der Sicherheit der Zündkreisanordnung kann eine weitere Halbleiter-Endstufe zentral in die Energiezuführungsleitung des High-Side-Zündkreises eingeschleift werden.

Die so genannten Halbleiter-Endstufen werden in der Regel durch Leistungstransistoren gebildet, welche als Power-MOSFETs ausgeführt sind und jeweils über eine Source-Drain-Reverse-Diode verfügen. Um das Risiko einer Fehlauslösung, insbesondere bei einem Versorgungsspannungskurzschluss im Zündkreis in der Startphase zu minimieren, wird der Energiespeicher und/oder die Fahrzeugbordnetzspannung verpolgeschützt an die Zündkreise angekoppelt.

### Offenbarung der Erfindung

Das erfindungsgemäße Verfahren zur Überprüfung einer Versorgungsschaltung für mindestens einen Zündkreis mit den Merkmalen des unabhängigen Patentanspruchs 1 sowie eine Versorgungsschaltung für mindestens einen Zündkreis mit den Merkmalen des unabhängigen Patentanspruchs 11 haben demgegenüber den Vorteil, dass die Sperrfähigkeit von Verpolschutzelementen bzw. Koppeldioden in der Zündkreisversorgungsschaltung geprüft und im Fehlerfalle zur Anzeige gebracht werden können. Dadurch kann in vorteilhafter Weise die Gefahr von Fehlauslösungen ohne vorausgehende Fehlerindikation verhindert werden.

Ausführungsformen der vorliegenden Erfindung stellen ein Verfahren zur Überprüfung einer Versorgungsschaltung für mindestens einen Zündkreis zur Verfügung, welcher mindestens einen Energiespeicher, eine erste Konvertierungsschaltung, welche eine Versorgungsspannung auf einen vorgegebenen Spannungspegel anhebt und den mindestens einen Energiespeicher lädt, und eine ansteuerbare Entladeschaltung umfasst, welche den mindestens einen Energiespeicher bei Bedarf entlädt, wobei der Energiespeicher über eine erste Koppeldiode mit dem mindestens einen Zündkreis verbunden ist, und wobei die Versorgungsspannung über eine zweite Koppeldiode an den mindestens einen Zündkreis angelegt ist. Erfindungsgemäß bleibt mit Systemstart bis zum Abschluss einer Versorgungsspannungsprüfung eine ansteuerbare Ladeschaltung deaktiviert und trennt den mindestens einen Energiespeicher von der ersten Konvertierungsschaltung, wobei nach einem Systemstart ein Ladungszustand des mindestens einen Energiespeichers ermittelt und mit mindestens einem vorgegebenen Schwellwert verglichen wird, und wobei in Abhängigkeit des mindestens einen Vergleichs eine fehlerfreie Versorgungsschaltung oder mindestens ein Fehler erkannt wird.

Des Weiteren wird eine Versorgungsschaltung für mindestens einen Zündkreis vorgeschlagen, welche mindestens einen Energiespeicher und eine erste Konvertierungsschaltung umfasst, welche eine Versorgungsspannung auf einen vorgegebenen Spannungspegel anhebt und den mindestens einen Energiespeicher lädt, wobei zwischen dem Energiespeicher und dem mindestens einen Zündkreis eine erste Koppeldiode angeordnet ist, wobei eine Versorgungsspannung über eine zweite Koppeldiode an den mindestens einen Zündkreis anlegbar ist, und wobei eine ansteuerbare Entladeschaltung den mindestens einen Energiespeicher bei Bedarf entlädt. Erfindungsgemäß ist zwischen der ersten Konvertierungsschaltung und dem mindestens einen Energiespeicher eine ansteuerbare Ladeschaltung eingeschleift.

Der von der ersten Konvertierungsschaltung erzeugte vorgegebene Spannungspegel wird an einen Eingang einer zweiten Konvertierungsschaltung angelegt, welche mindestens eine Betriebsspannung für ein korrespondierendes Steuergerät erzeugt. Über die erfindungsgemäße ansteuerbare Ladeschaltung kann der vorgegebene erhöhte Spannungspegel mit dem mindestens einen Energiespeicher verbunden werden und diesen laden. Zudem kann die als MOS-Schalter wirkende Ladeschaltung zur bordspannungsunabhängigen Versorgung (autarke Energieversorgung) des Steuergeräts den Energiespeicher rückwärts mit der zweiten Konvertierungsschaltung verbinden, wenn der Spannungspegel am Eingang der Ladeschaltung niedriger als der Spannungspegel des mindestens einen Energiespeichers ist. Zusätzlich kann parallel zur ansteuerbaren Ladeschaltung eine Rückwärtsdiode angeordnet werden, welche den mindestens einen Energiespeicher redundant mit der zweiten Konvertierungsschaltung verbindet. Dadurch kann ein Fehler in der als MOS-Schalter wirkenden Ladeschaltung kompensiert werden.

Die erfindungsgemäße Versorgungsschaltung kann beispielsweise in einer Zündkreisanordnung für ein Personenschutzsystem eingesetzt werden und umfasst neben dem mindestens einen Zündkreis ein Zündelement, welches von dem mindestens einen Zündkreis gezündet werden kann. Die ermittelten Fehlerzustände bzw. die ermittelten fehlerfreien Zustände können über geeignete optische und/oder akustische Anzeigemittel an den Benutzer ausgeben werden.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Überprüfung einer Versorgungsschaltung für mindestens einen Zündkreis und der im unabhängigen Patentanspruch 11 angegebenen Versorgungsschaltung für mindestens einen Zündkreis möglich.

Besonders vorteilhaft ist, dass eine fehlerfreie Ankopplung der Versorgungsschaltung an mindestens einen Zündkreis erkannt werden kann, wenn der ermittelte Ladungszustand des mindestens einen Energiespeichers einen ersten Schwellwert unterschreitet. Da im Falle eines Defektes bzw. Fehlers der ersten Koppeldiode der Energiespeicher über die zweite Koppeldiode von der positiven Versorgungsspannung des Fahrzeugs aufgeladen wird, entspricht eine Ladespannung bzw. der Ladungszustand des Energiespeichers dem Pegel der positiven Versorgungsspannung des Fahrzeugs reduziert um eine Durchlassspannung der zweiten Koppeldiode. Somit entspricht die Ladespannung bzw. der Ladungszustand des Energiespeichers bei einem Defekt der ersten Koppeldiode im unteren Grenzfall einem minimalen Pegel der positiven Versorgungsspannung des Fahrzeugs, reduziert um die Durchlassspannung der zweiten Koppeldiode. Daher wird der erste Schwellwert vorzugsweise basierend auf dem minimalen Wert der Versorgungsspannung vorgegeben, so dass bei einer Unterschreitung dieses ersten Schwellwertes davon ausgegangen werden kann, dass kein einfacher Fehler in der Versorgungsschaltung vorliegt.

In vorteilhafter Ausgestaltung des erfindungsgemäßen Verfahrens kann eine fehlerhafte zweite Konvertierungsschaltung oder ein Warm-Reset-Fehler erkannt werden, wenn der ermittelte Ladungszustand des mindestens einen Energiespeichers einen zweiten Schwellwert überschreitet. Da der Energiespeicher, wie oben bereits ausgeführt ist, im Falle eines Defektes bzw. Fehlers der ersten Koppeldiode über die zweite Koppeldiode von der positiven Versorgungsspannung des Fahrzeugs aufgeladen wird, entspricht eine Ladespannung bzw. der Ladungszustand des Energiespeichers dem Pegel der positiven Versorgungsspannung des Fahrzeugs reduziert um eine Durchlassspannung der zweiten Koppeldiode. Somit entspricht die Ladespannung bzw. der Ladungszustand des Energiespeichers bei einem Defekt der ersten Koppeldiode im oberen Grenzfall einem maximalen Pegel der positiven Versorgungsspannung des Fahrzeugs, reduziert um die Durchlassspannung der zweiten Koppeldiode. Da im Fahrzeug zudem keine normalen bzw. unerkannte fehlerhafte Versorgungsspannungen mit einem höheren Pegel als der maximale Pegel der nominalen Ladespannung des mindestens einen Energiespeichers bzw. der Energiereserve auftreten können, repräsentiert der zweite Schwellwert vorzugsweise den maximalen nicht fehlerhaften Wert der Versorgungsspannung, so dass bei einer Überschreitung dieses zweiten Schwellwertes davon ausgegangen werden kann, dass ein einfacher Fehler in der zweiten Konvertierungsschaltung oder ein Warm-Reset-Fehler im Steuergerät vorliegt und die erste Koppeldiode keinen Defekt bzw. Fehler aufweist.

In weiterer vorteilhafter Ausgestaltung des erfindungsgemäßen Verfahrens kann die Entladeschaltung für einen vorgegebenen Zeitraum aktiviert werden, wenn der ermittelte Ladungszustand des mindestens einen Energiespeichers zwischen dem ersten Schwellwert und einem dritten Schwellwert liegt, wobei nach Ablauf des vorgegebenen Zeitraums der Ladungszustand des mindestens einen Energiespeichers neu ermittelt wird.

Liegt der ermittelte Ladungszustand des Energiespeichers zwischen dem ersten und dritten Schwellwert, dann kann ein Defekt bzw. Fehler in der ersten Koppeldiode vorliegen, oder dieser Umstand kann auf einen harmlosen schnellen OFF-ON-Versorgungs-Zyklus zurückgeführt werden. In diesem Fall wird nach Erreichen einer untere Eingangsspannungsgrenze bzw. einer minimalen Eingangsspannung der zweiten Konvertierungsschaltung mit einem nachfolgenden Resetzustand des Steuergeräts durch den schnellen OFF-ON-Versorgungs-Zyklus eine weitere Entladung des Energiespeichers durch erneutes Einschalten der Steuergerätebetriebsspannung verhindert und es liegt kein Defekt bzw. Fehler in der Versorgungsschaltung bzw. der ersten Koppeldiode vor. Daher repräsentiert der dritte Schwellwert vorzugsweise den minimalen Wert der Eingangsspannung der zweiten Konvertierungsschaltung. Durch den Vergleich mit dem dritten Schwellwert, ist in vorteilhafter Weise eine weitere Eingrenzung eines auftretenden Fehlers oder die Erkennung einer fehlerfreien Versorgungsschaltung möglich. So kann beispielsweise eine defekte erste Koppeldiode erkannt werden, wenn nach Ablauf des vorgegebenen Zeitraums keine Ladungszustandsreduzierung des mindestens einen Energiespeichers durch die zu Testzwecken aktivierte Entladeschaltung bei deaktivierter Ladeschaltung ermittelt wird. Das bedeutet, dass der neu ermittelte Ladungszustand des Energiespeichers dem am Systemstart ermittelten Ladungszustand des Energiespeichers entspricht. Eine fehlerfreie Versorgungsschaltung kann erkannt werden, wenn nach Ablauf des vorgegebenen Zeitraums eine Ladungszustandsreduzierung ermittelt wird und der zum Systemstart ermittelte Ladungszustand des mindestens einen Energiespeichers zwischen dem ersten Schwellwert und dem dritten Schwellwert liegt.

Eine fehlerhafte zweite Konvertierungsschaltung oder ein Warm-Reset-Fehler kann in vorteilhafter Weise erkannt werden, wenn nach Ablauf des vorgegebenen Zeitraums eine Ladungszustandsreduzierung des mindestens einen Energiespeichers durch die zu Testzwecken aktivierte Entladeschaltung bei deaktivierter Ladeschaltung ermittelt wird und der zum Systemstart ermittelte Ladungszustand des mindestens einen Energiespeichers zwischen einem dritten Schwellwert und dem zweiten Schwellwert liegt. Liegt der Ladungszustand des Energiespeichers zwischen dem dritten Schwellwert und dem zweiten Schwellwert, dann ist entweder die zweite Konvertierungsschaltung oder die Reset-Struktur des Steuergerätes defekt, da ein einfacher Defekt bzw. Fehler in der ersten Koppeldiode aufgrund der ermittelten Ladespannungsdifferenz ausgeschlossen werden kann. Da der harmlose schnelle OFF-ON-Versorgungs-Zyklus ausgeschlossen werden kann, wenn die Ladespannung bzw. der Ladungszustand des Energiespeichers oberhalb der minimalen Eingangsspannung der zweiten Konvertierungsschaltung liegt, kann auf eine fehlerhafte zweite Konvertierungsschaltung oder ein Warm-Reset-Fehler im Steuergerät geschlossen werden. Daher repräsentiert der dritte Schwellwert vorzugsweise den minimalen Wert der Eingangsspannung der zweiten Konvertierungsschaltung.

In vorteilhafter Ausgestaltung der erfindungsgemäßen Versorgungsschaltung kann parallel zur ansteuerbaren Ladeschaltung eine Rückwärtsdiode angeordnet werden, welche den mindestens einen Energiespeicher mit einer zweiten Konvertierungsschaltung verbindet, welche aus einer Eingangsspannung mindestens eine weitere Betriebsspannung für ein Steuergerät erzeugen kann. Dies ermöglicht in vorteilhafter Weise eine von der Versorgungsspannung des Fahrzeugs autarke Energieversorgung der zweiten Konvertierungsschaltung bzw. des Steuergeräts aus dem mindestens einen Energiespeicher über die zur Ladeschaltung redundante Rückwärtsdiode, so dass in vorteilhafter Weise ein Fehler in der als MOS-Schalter wirkenden Ladeschaltung kompensiert werden kann.

In weiterer vorteilhafter Ausgestaltung der erfindungsgemäßen Versorgungsschaltung steuert eine Auswerte- und Steuereinheit die Ladeschaltung und/oder die Entladeschaltung an, um den mindestens einen Energiespeicher bei Bedarf zu laden oder zu entladen. Des Weiteren kann die Auswerte- und Steuereinheit ein erfindungsgemäßes Verfahren zur Überprüfung einer Versorgungsschaltung für mindestens einen Zündkreis durchführen.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockschaltbild eines ersten Ausführungsbeispiels einer erfindungsgemäßen Versorgungsschaltung für mindestens einen Zündkreis eines Personenschutzsystems.
Fig. 2 zeigt ein schematisches Blockschaltbild eines zweiten Ausführungsbeispiels einer erfindungsgemäßen Versorgungsschaltung für mindestens einen Zündkreis eines Personenschutzsystems.
Fig. 3 eine schematische Darstellung von verschiedenen Bereichen eines zum Systemstart ermittelten Ladungszustands mindestens eines Energiespeichers der erfindungsgemäßen Versorgungsschaltungen für mindestens einen Zündkreis aus Fig. 1 oder 2,
Fig. 4 bis Fig. 7 zeigen jeweils ein Kennliniendiagramm eines Ladungszustands des mindestens einen Energiespeichers der erfindungsgemäßen Versorgungsschaltungen aus Fig. 1 für verschiedene Fehlerfälle oder 2 während der Ausführung eines erfindungsgemäßen Verfahrens zur Überprüfung einer Versorgungsschaltung.

### Ausführungsformen der Erfindung

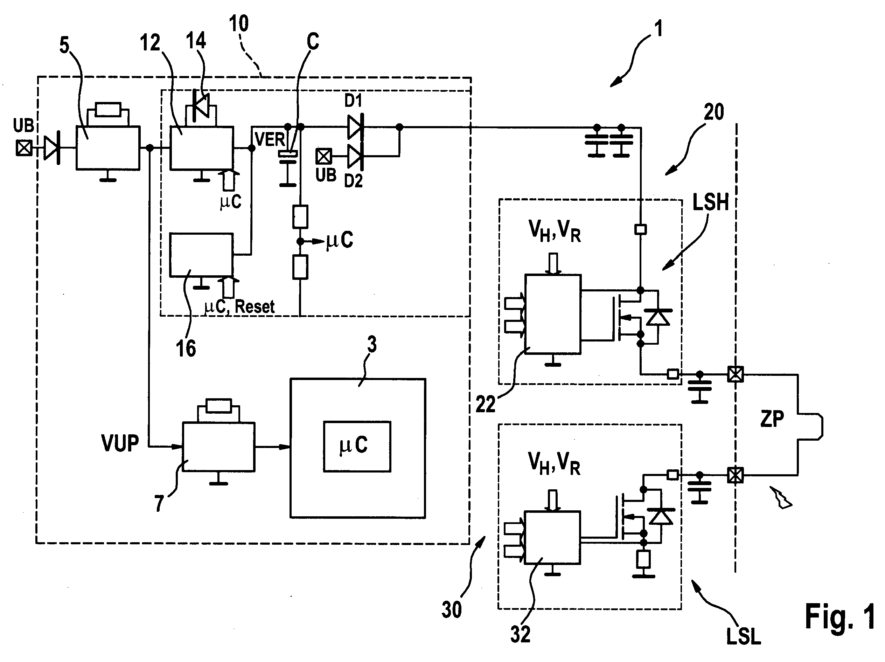

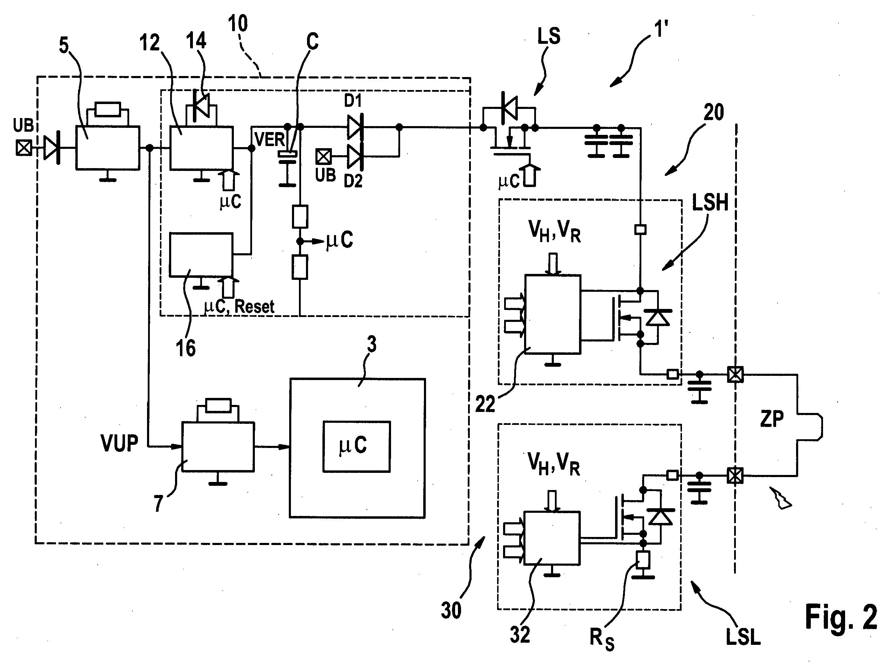

Wie aus Fig. 1 und 2 ersichtlich ist, umfasst eine erfindungsgemäße Versorgungsschaltung 10 für mindestens einen Zündkreis 20, 30 mindestens einen Energiespeicher C und eine erste Konvertierungsschaltung 5, welche eine Versorgungsspannung UB eines Fahrzeugbordnetzes auf einen vorgegebenen Spannungspegel VUP anhebt und den mindestens einen Energiespeicher C lädt, sowie eine nachgeschaltete zweite Konvertierungsschaltung 7. Die zweite Konvertierungsschaltung 7 erzeugt im Normalbetrieb aus einer im Wesentlichen konstanten Eingangsspannung VUP bzw. im von der Versorgungsspannung UB autarken Betrieb aus der im mindestens einen Energiespeicher C gespeicherten Ladespannung VER mindestens eine Betriebsspannung für ein korrespondierendes Steuergerät 3. Zwischen dem Energiespeicher C und dem mindestens einen Zündkreis 20, 30 ist eine erste Koppeldiode D1 angeordnet und über eine zweite Koppeldiode D2 ist eine Versorgungsspannung UB an den mindestens einen Zündkreis 20, 30 anlegbar. Bei Bedarf entlädt eine ansteuerbare Entladeschaltung 16 den mindestens einen Energiespeicher C. Erfindungsgemäß ist zwischen der ersten Konvertierungsschaltung 5 und dem mindestens einen Energiespeicher C eine ansteuerbare Ladeschaltung 12 eingeschleift. Über die beispielsweise von einer Auswerte- und Steuereinheit des Steuergeräts 3, welche vorzugsweise als Mikrocontroller (µC) ausgeführt ist, ansteuerbare Ladeschaltung 12 wird der mindestens eine Energiespeicher C aus der ersten Konvertierungsschaltung 5 geladen. Am Ende des Ladevorgangs entspricht ein Spannungspegel VER des mindestens einen Energiespeichers C, welcher auch als Energiereserve bezeichnet wird, im Wesentlichen dem aus der Versorgungsspannung UB erzeugten Spannungspegel VUP. Die Ansteuerung der Entladeschaltung 16 erfolgt bei inaktiver Ladeschaltung 12 im Resetzustand des Steuergerätes 3 automatisch und sonst beispielsweise ebenfalls durch den Mikrocontroller (µC) des Steuergeräts 3.

Wie aus Fig. 1 und 2 weiter ersichtlich ist, ist parallel zur ansteuerbaren Ladeschaltung 12 eine Rückwärtsdiode 14 angeordnet. Die Rückwärtsdiode 14 stellt eine redundante passive Ankopplung des mindestens einen Energiespeichers C mit der zweiten Konvertierungsschaltung 7 dar, welche im von der Versorgungsspannung UB autarken Betrieb, in welchem der Spannungspegel VER des mindestens einen Energiespeichers C größer als der aus der Versorgungsspannung UB erzeugte Spannungspegel VUP ist, aus einer Eingangsspannung mindestens eine weitere Betriebsspannung für das Steuergerät 3 erzeugt und für eine vorgegebenen Zeitspanne aufrecht erhält. Ein zwischen der ersten Konvertierungsschaltung 5 und dem mindestens einen Energiespeicher C angeordneter Ladestromregler der Ladeschaltung 12 mit einem MOS-Feldeffekttransistor als Hauptschalter verhält sich im von der Versorgungsspannung UB autarken Betrieb wie ein leitender Schalter, zu welchem die Rückwärtsdiode 14 parallel geschaltet ist, um die redundante Verbindung zwischen der ersten Konvertierungsschaltung 5 und dem mindestens einen Energiespeicher C zur Verfügung zu stellen. Im Normalbetrieb, d.h. außerhalb des von der Versorgungsspannung UB autarken Betriebs, steuert die Auswerte- und Steuereinheit µC des Steuergeräts 3 die Ladeschaltung 12 und/oder die Entladeschaltung 16 an, um den mindestens einen Energiespeicher C bei Bedarf zu laden oder zu entladen.

Wie aus Fig. 1 und 2 weiter ersichtlich ist, umfassen die dargestellten Ausführungsbeispiele einer erfindungsgemäßen Zündkreisanordnung 1, 1'für ein Personenschutzsystem jeweils mindestens einen Zündkreis 20, 30 zur Aktivierung von Rückhaltemitteln über mindestens ein Zündelement ZP, welches durch mindestens einen Zündkreis 20, 30 gezündet werden kann, und eine erfindungsgemäße Versorgungsschaltung 10, welche den mindestens einen Zündkreis 20, 30 mit Energie versorgt. Die Energie zur Aktivierung dieser Rückhaltemittel über das Zündelement ZP kann aus dem Energiespeicher C und/oder aus dem Fahrzeugbordnetz bereitgestellt werden, welches einen Generator und mindestens eine Batterie umfasst, welche die Versorgungsspannung UB zur Verfügung stellen. Das bedeutet, dass bei laufendem Motor der Energiespeicher C und/oder der Generator und bei Stillstand des Motors der Energiespeicher C und/oder die Batterie die erforderliche Energie zur Aktivierung der Rückhaltemittel zur Verfügung stellt. Selbstverständlich können Ausführungsformen der erfindungsgemäßen Zündkreisanordnung eine beliebige Anzahl von Zündkreisen 20, 30 umfassen, welche über Ausführungsformen der erfindungsgemäßen Versorgungsschaltung 10 mit Energie versorgt werden können.

Bei den dargestellten Ausführungsbeispielen umfassen die Zündkreisanordnungen 1, 1' jeweils einen High-Side-Block 20 und einen Low-Side-Block 30, welche jeweils eine Halbleiter-Endstufe LSH, LSL und eine korrespondierende Treiber- und/oder Ansteuerschaltung 22, 32 aufweisen. Hierbei ist eine High-Side-Endstufe des High-Side-Blocks 20 in eine Energiezuführungsleitung des Zündelements ZP eingeschleift, und eine Low-Side-Endstufe des Low-Side-Blocks 30 ist in die Rückführungsleitung des Zündelements ZP eingeschleift. Die Halbleiter-Endstufen LSH, LSL sind als Leistungstransistoren in Form von Power-MOSFETs ausgeführt, welche jeweils über eine Source-Drain-Reverse-Diode verfügen. Die Treiber- und/oder Ansteuerschaltungen 22, 32 werden von der Auswerte- und Steuereinheit µC des Steuergeräts 3 angesteuert, um das Zündelement ZP mit Energie zu versorgen und eine Zündung auszulösen, wodurch eine korrespondierendes Rückhaltemittel aktiviert wird. Zusätzlich können die Treiber- und/oder Ansteuerschaltungen 22, 32 jeweils Hilfsgrößen V_{H}, wie beispielsweise analoge und digitale Hilfsspannungen, und/oder Referenzgrößen V_{R}, wie beispielsweise Referenzströme und/oder Referenzspannungen zur Ansteuerung der Halbleiterendstufen LSH, LSL empfangen. Um das Risiko einer Fehlauslösung, insbesondere bei einem Versorgungsspannungskurzschluss an der Rückleitung des Zündelements ZP in einem der Zündkreise 20, 30 in der Startphase zu minimieren, wird der Energiespeicher C und/oder die Versorgungsspannung UB aus dem Fahrzeugbordnetz über jeweils eine Koppeldiode D1, D2 verpolgeschützt an die Zündkreise 20, 30 und somit an das Zündelement ZP angekoppelt.

Der Unterschied zwischen einem in Fig. 1 dargestellten ersten Ausführungsbeispiel der erfindungsgemäßen Zündkreisanordnung 1 und einem in Fig. 2 dargestellten zweiten Ausführungsbeispiel der erfindungsgemäßen Zündkreisanordnung 1' besteht in eine weiteren Halbleiter-Endstufe LS, welche zur Erhöhung der Sicherheit der Zündkreisanordnung 1' zentral in die Energiezuführungsleitung des High-Side-Blocks 20 eingeschleift ist. Die weitere Halbleiter-Endstufe LS ist ebenfalls als Leistungstransistor in Form eines Power-MOSFETs ausgeführt, welcher aufgrund der Bauart auch über eine Source-Drain-Reverse-Diode verfügt und von der Auswerte- und Steuereinheit µC des Steuergeräts 3 angesteuert wird. Die Versorgungsschaltung 10 und die Zündkreise 20, 30 bzw. die High-Side-Blöcke 20 und die Low-Side-Blöcke 30 sind in beiden Ausführungsbeispielen identisch ausgeführt.

In einer aus dem Stand der Technik bekannten intakten Zündkreisanordnung wird der mindestens eine Energiespeicher C durch die erste Konvertierungsschaltung 5 während eines Systemstarts geladen und letztendlich auf einen definierten Spannungswert geregelt, wobei die erste Konvertierungsschaltung 5 den Pegel der Versorgungsspannung UB, welcher im Bereich von ca. 6V bis 18V liegt, auf einen vorgegebenen Zündspannungspegel erhöht, welcher je nach Ausführungsform im Bereich von ca. 24V bis 25V bzw. im Bereich von 33V bis 35V liegt. Im Falle eines Kurzschlusses zur positiven Versorgungsspannung UB des Fahrzeugs an einer Rückleitung des Zündelements ZP in einem der Zündkreise 20, 30 fließt in den mindestens einen Energiespeicher C kein zündfähiger Strom zurück, da die zwischen dem mindestens einen Energiespeicher C und dem mindestens einen Zündkreis 20, 30 angeordnete erste Koppeldiode D1 sperrt. Ist die erste Koppeldiode D1 jedoch defekt und kann nicht sperren, kann es zu einer Fehlauslösung des Zündelements ZP kommen. Ein solcher Kurzschluss zur positiven Versorgungsspannung UB des Fahrzeugs in einem der Zündkreise 20, 30 wird in allen bekannten Personenschutzsystemen erkannt. Ein Kurzschluss der ersten Koppeldiode D1 bzw. ein fehlendes Sperrverhalten der ersten Koppeldiode D1 kann bei aus dem Stand der Technik bekannten Systemen nicht erkannt werden. Daher kann ein nicht erkannter bzw. "schlafender" Defekt der ersten Koppeldiode D1, welcher nicht zur Anzeige gebracht wurde, zur Fehlauslösung beim Systemstart führen, falls ein solcher Kurzschluss zur positiven Versorgungsspannung UB des Fahrzeugs an einer Minusseite des Zündelements ZP in einem der Zündkreise 20, 30 vorhanden ist.

Durch die generelle Verwendung der redundanten Doppelversorgung des mindestens einen Zündkreises 20, 30 über den mindestens einen Energiespeicher C und/oder die positive Versorgungsspannung UB des Fahrzeugs, ist die notwendige Voraussetzung zur erfindungsgemäßen Erkennung von Koppelfehlern in einer Zündkreisversorgungschaltung 10 erfüllt. Zudem wird durch die erfindungsgemäße Verwendung der Ladeschaltung 12 zwischen der ersten Konvertierungsschaltung 5 und dem mindestens einen Energiespeicher C, sowie der Entladeschaltung 16 zwischen dem mindestens einen Energiespeicher C und Masse, der Ladungszustand bzw. die Ladespannung VER des mindestens einen Energiespeichers C bei gestartetem System über die Auswerte- und Steuereinheit µC im Steuergerät 3 kontrollierbar gemacht und damit eine hinreichende Bedingung zur Erkennung von Koppelfehlern geschaffen. Das Steuergerät 3 ist beispielsweise als Airbagsteuergerät ausgeführt, welches die Aktivierung bzw. Zündung von als Airbags ausgeführten Rückhaltemitteln im Personenschutzsystem durchführt und überwacht.

Im Normalfall wird der Ladungszustand VER bzw. die Energiereservespannung in dem mindestens einen Energiespeicher C durch die Autarkieversorgung bei einem nicht versorgten Steuergerät 3 rasch abgebaut, wobei der Ladungszustands VER bzw. die Energiereservespannung in dem mindestens einen Energiespeicher C in der Regel innerhalb einer Zeitspanne von ca. 10s abgebaut wird. Der rasche Abbau wird nach Eintritt eines Rücksetzzustandes (RESET) des Steuergeräts 3 stark verlangsamt, welcher dadurch gekennzeichnet ist, dass die Eingangsspannung VUP der zweiten Konvertierungsschaltung 7 unter einem vorgegebenen minimalen Wert von ca. 9V liegt. Die weitere Entladung im RESET-Zustand übernimmt neben anderen geringfügigen Lasten und Leckagen automatisch die Entladeschaltung 16.

Wird das Steuergerät 3 wieder neu gestartet, dann verbleibt der mindestens eine Energiespeicher C zunächst im ungeladenen Zustand. Erst durch die steuerbare Ladeschaltung 12 wird auf Befehl der Auswerte- und Steuereinheit µC der mindestens eine Energiespeicher C mit dem gewünschten Ladestrom geladen. Ist die erste Koppeldiode D1 in der Zündkreisversorgungsschaltung 10 defekt und kann nicht sperren, dann wird der mindestens eine Energiespeicher C unabhängig von der Ladeschaltung 12 über die zweite Koppeldiode D2 rasch mit hohem Strom aus der positiven Versorgungsspannung UB des Fahrzeugs geladen. Zur Erkennung eines solchen Defekts bzw. Fehlers der ersten Koppeldiode D1 bzw. zur Überprüfung der erfindungsgemäßen Versorgungsschaltung 10 bleibt die ansteuerbare Ladeschaltung 12 zum Systemstart bis zum Abschluss der Versorgungsspannungsüberprüfung deaktiviert und der mindestens eine Energiespeicher C von der ersten Konvertierungsschaltung 5 getrennt, wobei nach dem Systemstart ein Ladungszustand VER_start des mindestens einen Energiespeichers C ermittelt wird. Der Ladungszustand VER des Energiespeichers C kann von der Auswerte- und Steuereinheit µC des Steuergeräts 3 beispielsweise über einen Spannungsteiler und einen Analog-Digital-Wandler der Auswerte- und Steuereinheit µC erfasst werden. Der ermittelte Ladungszustand VER_start des mindestens einen Energiespeichers C wird mit mindestens einem vorgegebenen Schwellwert UB_min, UB_max, V_min verglichen, wobei in Abhängigkeit des mindestens einen Vergleichs eine fehlerfreie Versorgungsschaltung 10 oder mindestens ein Fehler erkannt wird. Hierbei entspricht der vorgegebenen Schwellwert UB_min einer unteren Betriebsspannungsgrenze des Steuergeräts 3 reduziert um eine maximale Diodenspannung von ca. 1V. Der vorgegebene Schwellwert UB_max entspricht einer oberen Betriebsspannungsgrenze des Steuergeräts 3 vermindert um eine minimale Diodenspannung von ca. 0V, und V_min entspricht einer minimalen Betriebsspannungsgrenze der zweiten Konvertierungsschaltung 7.

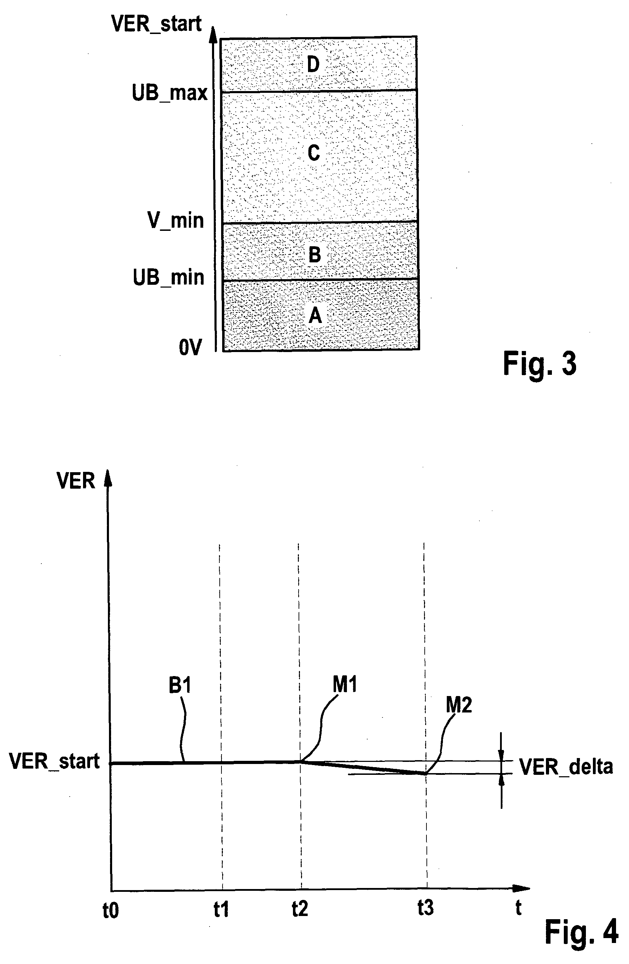

Fig. 3 zeigt verschiedene Bereiche A, B, C, D für den Ladungszustand VER_start des mindestens einen Energiespeichers C, welche durch die vorgegebenen Schwellwerte UB_min, UB_max, V_min festgelegt sind. Bei den dargestellten Ausführungsbeispielen wird der Ladungszustand VER des mindestens einen Energiespeichers C durch die an dem mindestens einen Energiespeicher C messbare Energiereservespannung bestimmt. Wie aus Fig. 3 ersichtlich ist, ist ein erster Spannungsbereich A nach oben durch einen ersten Schwellwert UB_min begrenzt, welcher basierend auf einem minimalen Wert der Versorgungsspannung UB bestimmt wird. Ein zweiter Spannungsbereich B wird nach unten vom ersten Schwellwert UB_min und nach oben von einem dritten Schwellwert V_min begrenzt, welcher den minimalen Wert der Eingangsspannung VER der zweiten Konvertierungsschaltung 7 repräsentiert. Ein dritter Spannungsbereich C wird nach unten vom dritten Schwellwert V_min und nach oben von einem zweiten Schwellwert UB_max begrenzt, welcher den maximalen Wert der Versorgungsspannung UB repräsentiert, und ein vierter Spannungsbereich D ist nach unten durch den zweiten Schwellwert UB_max begrenzt.

Die Auswerte- und Steuereinheit µC des Steuergeräts 3 erkennt eine fehlerfreie Versorgungsschaltung 10, wenn der ermittelte Ladungszustand VER_start des mindestens einen Energiespeichers C den ersten Schwellwert UB_min unterschreitet. Das bedeutet, dass der ermittelte Ladungszustand VER_start des mindestens einen Energiespeichers C im ersten Spannungsbereich A liegt. Liegt der ermittelte Ladungszustand VER_start des mindestens einen Energiespeichers C unterhalb des ersten Schwellwertes UB_min, dann liegt kein Fehler vor, da im Falle eines Defekts bzw. Fehlers der Koppeldiode D1 der mindestens eine Energiespeichers C über die zweite Koppeldiode D2 wenigstens mit dem minimalen Wert der Versorgungsspannung UB geladen wird, welcher um den Wert einer Durchlassspannung der zweiten Koppeldiode D2 reduziert ist. Da der minimale Wert der Versorgungsspannung UB ca. 6V entspricht, wird der erste Schwellwert UB_min auf beispielsweise ca. 5V festgelegt.

Liegt der ermittelte Ladungszustand VER_start des mindestens einen Energiespeichers C im vierten Spannungsbereich D über dem zweiten Schwellwert UB_max, dann erkennt die Auswerte- und Steuereinheit uC des Steuergeräts 3 einen Fehler im Bereich der zweiten Konvertierungsschaltung 7 und/oder einen Warm-Reset-Fehler im Steuergerät. Das Autarkieverhalten des Steuergerätes 3 war nicht in Ordnung, da sonst der Ladungszustand VER_start des Energiespeichers C aufgrund der Rückwärtsrichtung über die Ladeschaltung 12 bzw. die Rückwärtsdiode 14 unter den minimalen Wert der Eingangsspannung VUP der zweiten Konvertierungsschaltung 7 von beispielsweise ca. 9V entladen wäre, welche einem minimalen Spannungspegel entspricht, bei welchem die Betriebsspannungen für das Steuergerät 3 nicht mehr darstellbar sind und das Steuergerät 3 in einen Reset-Zustand wechselt. Da außerdem für die vom Fahrzeugbordnetz bereitgestellte Versorgungsspannung UB keine Werte auftreten können, welche über dem oberen Grenzwert bzw. dem maximalen Wert der Versorgungsspannung UB von beispielsweise ca. 18V liegen, liegt kein erkennbarer Fehler in der ersten Koppeldiode D1 vor, wenn der ermittelte Ladungszustand VER_start des mindestens einen Energiespeichers C über dem zweiten Schwellwert UB_max von ca. 18V liegt.

Liegt der ermittelte Ladungszustand VER_start des Energiespeichers C im dritten Spannungsbereich C zwischen dem dritten Schwellwert V_min von ca. 9V und dem zweiten Schwellwert UB_max von ca. 18V, dann erkennt die Auswerte- und Steuereinheit µC des Steuergeräts 3 entweder einen Fehler in der ersten Koppeldiode D1 oder in der zweiten Konvertierungsschaltung 7 bzw. in der Reset-Struktur des Steuergerätes 3. Liegt der ermittelte Ladungszustand VER_start des mindestens einen Energiespeichers C im zweiten Spannungsbereich B zwischen dem ersten Schwellwert UB_min von ca. 5V und dem dritten Schwellwert V_min von ca. 9V, dann kann die Auswerte- und Steuereinheit µC des Steuergeräts 3 einen Defekt bzw. Fehler in der ersten Koppeldiode D1 oder keinen Fehler in der Versorgungsschaltung 10 erkennen, da dieser Umstand auf einen harmlosen schnellen OFF-ON-Versorgungs-Zyklus zurückgeführt werden kann. In diesem Fall wird nach dem Unterschreiten des minimalen Wertes der Eingangsspannung VUP der zweiten Konvertierungsschaltung 7, welcher dem dritten Schwellwert V_min entspricht, mit einem nachfolgenden Reset-Vorgang des Steuergeräts 3, eine weitere Entladung des mindestens einen Energiespeichers C durch erneutes Einschalten der Versorgung des Steuergeräts verhindert. Um den Defekt bzw. Fehler der ersten Koppeldiode D1 im zweiten und dritten Spannungsbereich B, C nachzuweisen, wird in einem zweiten Schritt der Ladungszustand VER_start des mindestens einen Energiespeichers C durch die Entladeschaltung 16 reduziert. Die Entladeschaltung 16 kann beispielsweise einen Entladestrom in einem Bereich von ca. 10mA bis 100mA vorgegeben werden. Kann der Ladungszustand VER_start des mindestens einen Energiespeichers C ausreichend reduziert werden und nach Ablauf der Entladezeitspanne eine Ladungsdifferenz VER_delta ermittelt werden, dann liegt kein Fehler bzw. Defekt der ersten Koppeldiode vor.

Das bedeutet, dass die Auswerte- und Steuereinheit µC des Steuergeräts 3 die Entladeschaltung 16 für einen vorgegebenen Zeitraum aktiviert, wenn der ermittelte Ladungszustand VER_start des mindestens einen Energiespeichers C zwischen dem ersten Schwellwert UB_min und dem dritten Schwellwert UB_max liegt. Nach Ablauf des vorgegebenen Zeitraums ermittelt die Auswerte- und Steuereinheit µC des Steuergeräts 3 dann den neuen Ladungszustand VER des mindestens einen Energiespeichers C.

Die Auswerte- und Steuereinheit µC des Steuergeräts 3 erkennt eine defekte erste Koppeldiode D1, wenn nach Ablauf des vorgegebenen Zeitraums keine Ladungszustandsreduzierung VER_delta ermittelt wird. Die Auswerte- und Steuereinheit µC des Steuergeräts 3 erkennt eine fehlerfreie Versorgungsschaltung 10, wenn nach Ablauf des vorgegebenen Zeitraums eine Ladungszustandsreduzierung VER_delta ermittelt wird und der zum Systemstart ermittelte Ladungszustand VER_start des mindestens einen Energiespeichers C zwischen dem ersten Schwellwert UB_min und dem dritten Schwellwert V_min liegt. Die Auswerte- und Steuereinheit µC des Steuergeräts 3 erkennt eine fehlerhafte zweite Konvertierungsschaltung 7 oder ein Warm-Reset-Fehler, wenn nach Ablauf des vorgegebenen Zeitraums eine Ladungszustandsreduzierung VER_delta ermittelt wird und der zum Systemstart ermittelte Ladungszustand VER_start des mindestens einen Energiespeichers C zwischen dem dritten Schwellwert V_min und dem zweiten Schwellwert UB_max liegt.

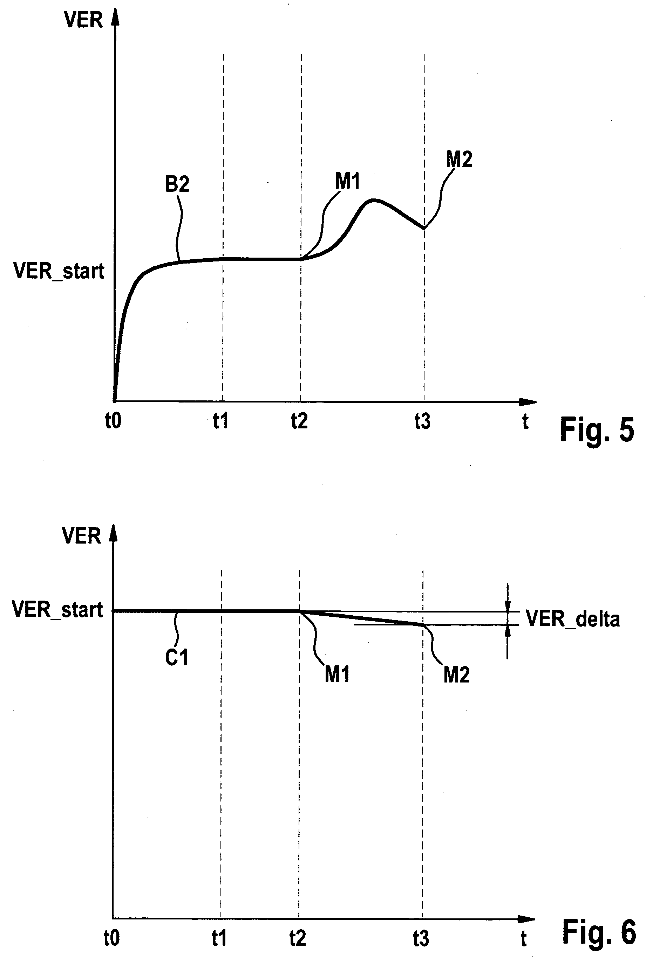

Fig. 4 zeigt eine erste Kennlinie B1 des Ladungszustands VER des mindestens einen Energiespeichers C der erfindungsgemäßen Versorgungsschaltung 10, und Fig. 5 zeigt eine zweite Kennlinie B2 des Ladungszustands VER des mindestens einen Energiespeichers C der erfindungsgemäßen Versorgungsschaltung 10. Bei den dargestellten Kennlinien B1, B2 liegt der zum Systemstart ermittelte Ladungszustand VER_start des mindestens einen Energiespeichers C im zweiten Spannungsbereich B zwischen dem ersten Schwellwert UB_min und dem dritten Schwellwert V_min. Bei den dargestellten Kennlinien B1, B2 entspricht ein erster Zeitpunkt t0 einem Start der Versorgung des Steuergeräts 3. Ein zweiter Zeitpunkt t1 entspricht einer Freigabe des Reset-Zustands des Steuergeräts 3. An einem dritten Zeitpunkt t2 führt die Auswerte- und Steuereinheit µC des Steuergeräts 3 eine erste Messung M1 zur Ermittlung des Ladungszustands VER_start des mindestens einen Energiespeichers ER zum Systemstart durch. Bei den dargestellten Kennlinien B1, B2 und dem ermittelten Ladungszustand ER_start des mindestens einen Energiespeichers C im zweiten Spannungsbereich B, kann die Auswerte- und Steuereinheit µC des Steuergeräts 3 einen Defekt bzw. Fehler in der ersten Koppeldiode D1 oder keinen Fehler in der Versorgungsschaltung 10 erkennen, da dieser Umstand auf einen harmlosen schnellen OFF-ON-Versorgungs-Zyklus zurückgeführt werden kann. Zur Unterscheidung aktiviert die Auswerte- und Steuereinheit µC des Steuergeräts 3 am dritten Zeitpunkt t2 die Entladeschaltung 16, um den Ladungszustand des mindestens einen Energiespeichers C bis zu einem vieren Zeitpunkt t3 zu reduzieren. Am vierten Zeitpunkt t3 führt die Auswerte- und Steuereinheit µC des Steuergeräts 3 eine zweite Messung M2 zur Ermittlung des aktuellen Ladungszustands VER des mindestens einen Energiespeichers C durch und überprüft ob eine Ladungszustandsreduzierung VER_delta vorliegt.

Bei der in Fig. 4 dargestellten ersten Kennlinie B1 kann die Auswerte- und Steuereinheit µC des Steuergeräts 3 eine Ladungszustandsreduzierung VER_delta ermitteln, so dass die Auswerte- und Steuereinheit µC des Steuergeräts 3 eine fehlerfreie Versorgungsschaltung 10 erkennt.

Bei der in Fig. 5 dargestellten zweiten Kennlinie B2 kann die Auswerte- und Steuereinheit µC des Steuergeräts 3 keine Ladungszustandsreduzierung VER_delta ermitteln, da die Entladeschaltung 16 keine Reduzierung des Ladungszustands erreichen konnte. Daher erkennt die Auswerte- und Steuereinheit µC des Steuergeräts 3 einen Fehler bzw. Defekt der ersten Koppeldiode D1.

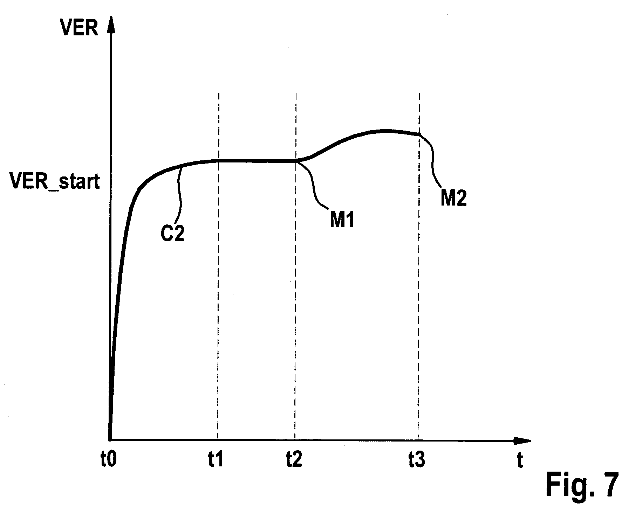

Fig. 6 zeigt eine dritte Kennlinie C1 des Ladungszustands VER des mindestens einen Energiespeichers C der erfindungsgemäßen Versorgungsschaltung 10, und Fig. 7 zeigt eine vierte Kennlinie C2 des Ladungszustands VER des mindestens einen Energiespeichers C der erfindungsgemäßen Versorgungsschaltung 10. Bei den dargestellten Kennlinien C1, C2 liegt der zum Systemstart ermittelte Ladungszustand VER_start des mindestens einen Energiespeichers C im dritten Spannungsbereich C zwischen dem dritten Schwellwert V_min und dem zweiten Schwellwert UB_max. Bei den dargestellten Kennlinien C1, C2 entspricht ein erster Zeitpunkt t0 analog zu den Kennliniendiagrammen aus Fig. 4 oder 5 dem Start der Versorgung des Steuergeräts 3. Ein zweiter Zeitpunkt t1 entspricht der Freigabe des Reset-Zustands des Steuergeräts 3. Am dritten Zeitpunkt t2 führt die Auswerte- und Steuereinheit µC des Steuergeräts 3 die erste Messung M1 zur Ermittlung des Ladungszustands VER_start des mindestens einen Energiespeichers C zum Systemstart durch. Bei den dargestellten Kennlinien C1, C2 und dem ermittelten Ladungszustand VER_start des mindestens einen Energiespeichers C im dritten Spannungsbereich C, kann die Auswerte- und Steuereinheit µC des Steuergeräts 3 einen Defekt bzw. Fehler in der ersten Koppeldiode D1 oder einen Fehler in der zweiten Konvertierungsschaltung 7 oder in der Reset-Struktur des Steuergeräts 3 erkennen. Zur Unterscheidung aktiviert die Auswerte- und Steuereinheit µC des Steuergeräts 3 am dritten Zeitpunkt t2 die Entladeschaltung 16, um den Ladungszustand des mindestens einen Energiespeichers C bis zu einem vieren Zeitpunkt t3 zu reduzieren. Am vierten Zeitpunkt t3 führt die Auswerte- und Steuereinheit µC des Steuergeräts 3 die zweite Messung M2 zur Ermittlung des aktuellen Ladungszustands VER des mindestens einen Energiespeichers C durch und überprüft ob eine Ladungszustandsreduzierung VER_delta vorliegt.

Bei der in Fig. 6 dargestellten dritten Kennlinie C1 kann die Auswerte- und Steuereinheit µC des Steuergeräts 3 eine Ladungszustandsreduzierung VER_delta ermitteln, so dass die Auswerte- und Steuereinheit µC des Steuergeräts 3 einen Fehler in der zweiten Konvertierungsschaltung 7 oder in der Reset-Struktur des Steuergeräts 3 erkennt.

Bei der in Fig. 7 dargestellten zweiten Kennlinie B2 kann die Auswerte- und Steuereinheit µC des Steuergeräts 3 keine Ladungszustandsreduzierung VER_delta erkennen, da die Entladeschaltung 16 keine Reduzierung des Ladungszustands VER erreichen konnte. Daher erkennt die Auswerte- und Steuereinheit µC des Steuergeräts 3 einen Fehler bzw. Defekt der ersten Koppeldiode D1.

Die Auswerte- und Steuereinheit µC des Steuergeräts 3 kann die ermittelten Fehlerzustände bzw. die ermittelten fehlerfreien Zustände über geeignete optische und/oder akustische Anzeigemittel an den Benutzer ausgeben.

Ausführungsformen der vorliegenden Erfindung stellen ein erfindungsgemäßes Verfahren zur Überprüfung einer Versorgungsschaltung für mindestens einen Zündkreis sowie eine Versorgungsschaltung für mindestens einen Zündkreis zur Verfügung, welche in vorteilhafter Weise die Sperrfähigkeit von Verpolschutzelementen bzw. Koppeldioden in der Zündkreisversorgungsschaltung überprüfen und im Fehlerfalle zur Anzeige bringen können. Dadurch kann in vorteilhafter Weise die Gefahr von Fehlauslösungen ohne vorausgehende Fehlerindikation verhindert werden.

## Patentansprüche

1. Verfahren zur Überprüfung einer Versorgungsschaltung für mindestens einen Zündkreis, welche mindestens einen Energiespeicher (C), eine erste Konvertierungsschaltung (5), welche eine Versorgungsspannung (UB) auf einen vorgegebenen Spannungspegel (VUP) anhebt und den mindestens einen Energiespeicher (C) lädt, und eine ansteuerbare Entladeschaltung (16) umfasst, welche den mindestens einen Energiespeicher (C) bei Bedarf entlädt, wobei der Energiespeicher (C) über eine erste Koppeldiode (D1) mit dem mindestens einen Zündkreis (20, 30) verbunden ist, und wobei die Versorgungsspannung (UB) über eine zweite Koppeldiode (D2) an den mindestens einen Zündkreis (20, 30) angelegt ist, **dadurch gekennzeichnet, dass** eine ansteuerbare Ladeschaltung (12) mit Systemstart bis zum Abschluss einer Versorgungsspannungsprüfung deaktiviert bleibt und den mindestens einen Energiespeichers (C) von der ersten Konvertierungsschaltung (5) trennt, wobei nach Systemstart ein Ladungszustand (VER_start) des mindestens einen Energiespeichers (C) ermittelt und mit mindestens einem vorgegebenen Schwellwert (UB_min, UB_max, V_min) verglichen wird, wobei in Abhängigkeit des mindestens einen Vergleichs eine fehlerfreie Ankopplung der Versorgungsschaltung (10) oder mindestens ein Fehler erkannt wird.

2. Verfahren nach Anspruch 1, **dadurch gekennzeichnet, dass** eine fehlerfreie Ankopplung der Versorgungsschaltung (10) an mindestens einen Zündkreis (20, 30) erkannt wird, wenn der ermittelte Ladungszustand (VER_start) des mindestens einen Energiespeichers (C) einen ersten Schwellwert (UB_min) unterschreitet.

3. Verfahren nach Anspruch 2, **dadurch gekennzeichnet, dass** der erste Schwellwert (UB_min) basierend auf einem minimalen Wert der Versorgungsspannung (UB) vorgegeben wird.

4. Verfahren nach einem der Ansprüche 1 bis 3, **dadurch gekennzeichnet, dass** eine fehlerhafte zweite Konvertierungsschaltung (7) oder ein Warm-Reset-Fehler erkannt wird, wenn der ermittelte Ladungszustand (VER_start) des mindestens einen Energiespeichers (C) einen zweiten Schwellwert (UB_max) überschreitet.

5. Verfahren nach Anspruch 4, **dadurch gekennzeichnet, dass** der zweite Schwellwert (UB_max) einen maximalen Wert der Versorgungsspannung (UB) repräsentiert.

6. Verfahren nach einem der Ansprüche 4 oder 5, **dadurch gekennzeichnet, dass** die Entladeschaltung (20) für einen vorgegebenen Zeitraum (t3-t2) aktiviert wird, wenn der ermittelte Ladungszustand (VER_start) des mindestens einen Energiespeichers (C) zwischen dem ersten Schwellwert (UB_min) und dem zweiten Schwellwert (UB_max) liegt, wobei nach Ablauf des vorgegebenen Zeitraums (t3-t2) der Ladungszustand (VER) des mindestens einen Energiespeichers (C) neu ermittelt wird.

7. Verfahren nach Anspruch 6, **dadurch gekennzeichnet, dass** eine defekte erste Koppeldiode (D1) erkannt wird, wenn nach Ablauf des vorgegebenen Zeitraums (t3-t2) keine Ladungszustandsreduzierung (VER_delta) ermittelt wird.

8. Verfahren nach Anspruch 6 oder 7, **dadurch gekennzeichnet, dass** eine fehlerfreie Versorgungsschaltung (10) erkannt wird, wenn nach Ablauf des vorgegebenen Zeitraums eine Ladungszustandsreduzierung (VER_delta) ermittelt wird und der zum Systemstart ermittelte Ladungszustand (VER_start) des mindestens einen Energiespeichers (C) zwischen dem ersten Schwellwert (UB_min) und einem dritten Schwellwert (V_min) liegt.

9. Verfahren nach Anspruch 6 oder 7, **dadurch gekennzeichnet, dass** eine fehlerhafte zweite Konvertierungsschaltung (7) oder ein Warm-Reset-Fehler erkannt wird, wenn nach Ablauf des vorgegebenen Zeitraums eine Ladungszustandsreduzierung (VER_delta) ermittelt wird und der zum Systemstart ermittelte Ladungszustand (VER_start) des mindestens einen Energiespeichers (C) zwischen einem dritten Schwellwert (V_min) und dem zweiten Schwellwert (UB_max) liegt.

10. Verfahren nach Anspruch 8 oder 9, **dadurch gekennzeichnet, dass** der dritte Schwellwert (V_min) einen minimalen Wert einer Eingangsspannung (VUP) der zweiten Konvertierungsschaltung (7) repräsentiert.

11. Versorgungsschaltung für mindestens einen Zündkreis mit mindestens einem Energiespeicher (C) und einer ersten Konvertierungsschaltung (5), welche eine Versorgungsspannung (UB) auf einen vorgegebenen Spannungspegel (VUP) anhebt und den mindestens einen Energiespeicher (C) lädt, wobei zwischen dem mindestens einen Energiespeicher (C) und dem mindestens einen Zündkreis (20, 30) eine erste Koppeldiode (D1) angeordnet ist, wobei eine Versorgungsspannung (UB) über eine zweite Koppeldiode (D2) an den mindestens einen Zündkreis (20, 30) anlegbar ist, und wobei eine ansteuerbare Entladeschaltung (16) den mindestens einen Energiespeicher (C) bei Bedarf entlädt, **dadurch gekennzeichnet, dass** zwischen der ersten Konvertierungsschaltung (5) und dem mindestens einen Energiespeicher (C) eine ansteuerbare Ladeschaltung (12) eingeschleift ist.

12. Versorgungsschaltung nach Anspruch 11, **dadurch gekennzeichnet, dass** parallel zur ansteuerbaren Ladeschaltung (12) eine Rückwärtsdiode (14) angeordnet ist, welche den mindestens einen Energiespeicher (C) redundant mit einer zweiten Konvertierungsschaltung (7) verbindet, welche aus einer Eingangsspannung (VUP) mindestens eine Betriebsspannung für ein Steuergerät (3) erzeugt.

13. Versorgungsschaltung nach Anspruch 11 oder 12, **dadurch gekennzeichnet, dass** eine Auswerte- und Steuereinheit (µC) die Ladeschaltung (12) und/oder die Endadeschaltung (16) ansteuert, um den mindestens einen Energiespeicher (C) bei Bedarf zu laden oder zu entladen.

14. Versorgungsschaltung nach Anspruch 13, **dadurch gekennzeichnet, dass** die Auswerte- und Steuereinheit (µC) ein Verfahren zur Überprüfung einer Versorgungsschaltung (10) für mindestens einen Zündkreis (20, 30) nach einem der Ansprüche 1 bis 10 durchführt.

15. Zündkreisanordnung für ein Personenschutzsystem mit mindestens einem Zündkreis (20, 30), **dadurch gekennzeichnet, dass** eine Versorgungsschaltung (10) nach einem der Ansprüche 11 bis 14 den mindestens einen Zündkreis (20, 30) versorgt.

## Claims

1. Method for checking a supply circuit for at least one ignition circuit, which supply circuit comprises at least one energy store (C), a first conversion circuit (5), which raises a supply voltage (UB) to a prescribed voltage level (VUP) and charges the at least one energy store (C), and an actuatable discharging circuit (16), which discharges the at least one energy store (C) when required, wherein the energy store (C) is connected to the at least one ignition circuit (20, 30) via a first coupling diode (D1), and wherein the supply voltage (UB) is applied to the at least one ignition circuit (20, 30) via a second coupling diode (D2), **characterized in that** an actuatable charging circuit (12) remains deactivated, when the system is started, until the conclusion of a supply voltage check and isolates the at least one energy store (C) from the first conversion circuit (5), wherein after the system is started, a state of charge (VER_start) of the at least one energy store (C) is ascertained and compared with at least one prescribed threshold value (UB_min, UB_max, V_min), the at least one comparison being taken as a basis for recognising error-free coupling of the supply circuit (10) or at least one error.

2. Method according to Claim 1, **characterized in that** error-free coupling of the supply circuit (10) to at least one ignition circuit (20, 30) is recognized when the ascertained state of charge (VER_start) of the at least one energy store (C) falls short of a first threshold value (UB_min).

3. Method according to Claim 2, **characterized in that** the first threshold value (UB_min) is prescribed on the basis of a minimum value of the supply voltage (UB).

4. Method according to one of Claims 1 to 3, **characterized in that** an erroneous second conversion circuit (7) or a warm-reset error is recognized when the ascertained state of charge (VER_start) of the at least one energy store (C) exceeds a second threshold value (UB_max).

5. Method according to Claim 4, **characterized in that** the second threshold value (UB_max) represents a maximum value of the supply voltage (UB).

6. Method according to either of Claims 4 and 5, **characterized in that** the discharging circuit (20) is activated for a prescribed period (t3-t2) when the ascertained state of charge (VER_start) of the at least one energy store (C) is between the first threshold value (UB_min) and the second threshold value (UB_max), the state of charge (VER) of the at least one energy store (C) being reascertained after the prescribed period (t3-t2) has elapsed.

7. Method according to Claim 6, **characterized in that** a defective first coupling diode (D1) is recognized when no state-of-charge reduction (VER_delta) is ascertained after the prescribed period (t3-t2) has elapsed.

8. Method according to Claim 6 or 7, **characterized in that** an error-free supply circuit (10) is recognized when a state-of-charge reduction (VER_delta) is ascertained and the state of charge (VER_start) of the at least one energy store (C) ascertained for the system start is between the first threshold value (UB_min) and a third threshold value (V_min) after the prescribed period has elapsed.

9. Method according to Claim 6 or 7, **characterized in that** an erroneous second conversion circuit (7) or a warm-reset error is recognized when a state-of-charge reduction (VER_delta) is ascertained and the state of charge (VER_start) of the at least one energy store (C) ascertained for the system start is between a third threshold value (V_min) and the second threshold value (UB_max) after the prescribed period has elapsed.

10. Method according to Claim 8 or 9, **characterized in that** the third threshold (V_min) represents a minimum value of an input voltage (VUP) for the second conversion circuit (7).

11. Supply circuit for at least one ignition circuit having at least one energy store (C) and a first conversion circuit (5), which raises a supply voltage (UB) to a prescribed voltage level (VUP) and charges the at least one energy store (C), wherein the at least one energy store (C) and the at least one ignition circuit (20, 30) have a first coupling diode (D1) arranged between them, wherein a supply voltage (UB) can be applied to the at least one ignition circuit (20, 30) via a second coupling diode (D2), and wherein an actuatable discharging circuit (16) discharges the at least one energy store (C) when required, **characterized in that** the first conversion circuit (5) and the at least one energy store (C) have an actuatable charging circuit (12) looped in between them.

12. Supply circuit according to Claim 11, **characterized in that** the actuatable charging circuit (12) has a backward diode (14) arranged in parallel with it that connects the at least one energy store (C) redundantly to a second conversion circuit (7) that takes an input voltage (VUP) and produces at least one operating voltage for a controller (3).

13. Supply circuit according to Claim 11 or 12, **characterized in that** an evaluation and control unit (µC) actuates the charging circuit (12) and/or the discharging circuit (16) in order to charge or discharge the at least one energy store (C) when required.

14. Supply circuit according to Claim 13, **characterized in that** the evaluation and control unit (µC) performs a method for checking a supply circuit (10) for at least one ignition circuit (20, 30) according to one of Claims 1 to 10.

15. Ignition circuit arrangement for a person protection system having at least one ignition circuit (20, 30), **characterized in that** a supply circuit (10) according to one of Claims 11 to 14 supplies power to the at least one ignition circuit (20, 30).

## Revendications

1. Procédé de contrôle d'un circuit d'alimentation destiné à au moins un circuit d'allumage, comprenant au moins un accumulateur d'énergie (C), un premier circuit convertisseur (5) qui élève une tension d'alimentation (UB) à un niveau de tension (VUP) prédéfini et qui charge l'au moins un accumulateur d'énergie (C), et un circuit de décharge (16) commandable qui décharge l'au moins un accumulateur d'énergie (C) en fonction des besoins, dans lequel l'accumulateur d'énergie (C) est relié par une première diode de couplage (D1) à l'au moins un circuit d'allumage (20, 30), et dans lequel la tension d'alimentation (UB) est appliquée par l'intermédiaire d'une deuxième diode de couplage (D2) à l'au moins un circuit d'allumage (20, 30), **caractérisé en ce qu'**un circuit de charge (12) commandable reste désactivé au démarrage du système jusqu'à l'interruption d'un contrôle de la tension d'alimentation et sépare l'au moins un accumulateur d'énergie (C) du premier circuit convertisseur (5), dans lequel un état de charge (VER_start) de l'au moins un accumulateur d'énergie (C) est obtenu après le démarrage du système et est comparé à au moins une valeur de seuil (UB_min, UB_max, V_min) prédéfinie, dans lequel un raccordement sans défaut du circuit d'alimentation (10) ou au moins un défaut est détecté en fonction de l'au moins une comparaison.

2. Procédé selon la revendication 1, **caractérisé en ce qu'**un raccordement sans défaut du circuit d'alimentation (10) à l'au moins un circuit d'allumage (20, 30) est détecté lorsque l'état de charge (VER_start) déterminé de l'au moins un dispositif de stockage d'énergie (C) s'abaisse en dessous d'une première valeur de seuil (UB_min).

3. Procédé selon la revendication 2, **caractérisé en ce que** la première valeur de seuil (UB_min) est prédéfinie sur la base d'une valeur minimale de la tension d'alimentation (UB).

4. Procédé selon l'une quelconque des revendications 1 à 3, **caractérisé en ce qu'**un deuxième circuit convertisseur (7) défectueux ou un défaut de réinitialisation à chaud est détecté lorsque l'état de charge (VER_start) déterminé de l'au moins un accumulateur d'énergie (C) dépasse une deuxième valeur de seuil (UB_max).

5. Procédé selon la revendication 4, **caractérisé en ce que** la deuxième valeur de seuil (UB_max) représente une valeur maximale de la tension d'alimentation (UB).

6. Procédé selon l'une quelconque des revendications 4 ou 5, **caractérisé en ce que** le circuit de décharge (20) est activé pendant un intervalle de temps (t3-t2) prédéfini lorsque l'état de charge (VER_start) déterminé de l'au moins un accumulateur d'énergie (C) se situe entre la première valeur de seuil (UB_min) et la deuxième valeur de seuil (UB_max), dans lequel l'état de charge (VER) de l'au moins un accumulateur d'énergie (C) est de nouveau déterminé après écoulement de l'intervalle de temps prédéfini (t3-t2).

7. Procédé selon la revendication 6, **caractérisé en ce qu'**une première diode de couplage (D1) défectueuse est détectée lorsqu'aucune diminution de l'état de charge (VER_delta) n'est déterminée après écoulement de l'intervalle de temps prédéfini (t3-t2).

8. Procédé selon la revendication 6 ou 7, **caractérisé en ce qu'**un circuit d'alimentation sans défaut (10) est détecté lorsqu'une diminution de l'état de charge (VER_delta) est déterminée après écoulement de l'intervalle de temps prédéfini et lorsque l'état de charge (VER_start) déterminé de l'au moins un accumulateur d'énergie (C) au démarrage du système se situe entre la première valeur de seuil (UB_min) et une troisième valeur de seuil (V_min).

9. Procédé selon la revendication 6 ou 7, **caractérisé en ce qu'**un deuxième circuit convertisseur (7) défectueux ou un défaut de réinitialisation à chaud est détecté lorsqu'une diminution de l'état de charge (VER_delta) est déterminée après écoulement de l'intervalle de temps prédéfini et lorsque l'état de charge (VER_start) de l'au moins un accumulateur d'énergie (C) déterminé au démarrage du système se situe entre une troisième valeur de seuil (V_min) et la deuxième valeur de seuil (UB_max).

10. Procédé selon la revendication 8 ou 9, **caractérisé en ce que** la troisième valeur de seuil (V_min) représente une valeur minimale d'une tension d'entrée (VUP) du deuxième circuit convertisseur (7).

11. Circuit d'alimentation destiné à au moins un circuit d'allumage, comprenant au moins un accumulateur d'énergie (C) et un premier circuit convertisseur (5) qui élève une tension d'alimentation (UB) à un niveau de tension (VUP) prédéfini et charge l'au moins un accumulateur d'énergie (C), dans lequel une première diode de couplage (D1) est disposée entre l'au moins un accumulateur d'énergie (C) et l'au moins un circuit d'allumage (20, 30), dans lequel une tension d'alimentation (UB) peut être appliquée par l'intermédiaire d'une deuxième diode de couplage (D2) à l'au moins un circuit d'allumage (20, 30), et dans lequel un circuit de décharge (16) commandable décharge l'au moins un accumulateur d'énergie (C) en fonction des besoins, **caractérisé en ce qu'**un circuit de charge (12) commandable est intégré entre le premier circuit convertisseur (5) et l'au moins un accumulateur d'énergie (C).

12. Circuit d'alimentation selon la revendication 11, **caractérisé en ce qu'**une diode polarisée en sens inverse (14) est disposée en parallèle au circuit de charge (12) commandable, laquelle diode connecte de manière redondante l'au moins un accumulateur d'énergie (C) à un deuxième circuit convertisseur (7) qui génère au moins une tension de fonctionnement destinée à un appareil de commande (3) à partir d'une tension d'entrée (VUP).

13. Circuit d'alimentation selon la revendication 11 ou 12, **caractérisé en ce qu'**une unité d'évaluation et de commande (µC) commande le circuit de charge (12) et/ou le circuit de décharge (16) afin de charger ou de décharger au moins un accumulateur d'énergie (C) en fonction des besoins.

14. Circuit d'alimentation selon la revendication 13, **caractérisé en ce que** l'unité d'évaluation et de commande (µC) met en oeuvre un procédé de contrôle d'un circuit d'alimentation (10) destiné à au moins un circuit d'allumage (20, 30) selon l'une quelconque des revendication 1 à 10.

15. Système de circuit d'allumage destiné à un système de protection des personnes comportant au moins un circuit d'allumage (20, 30), **caractérisé en ce qu'**un circuit d'alimentation (10) selon l'une quelconque des revendications 11 à 14 alimente l'au moins un circuit d'allumage (20, 30).
